# EUROPÄISCHE PATENTSCHRIFT

(11) **EP 0 731 306 B1**
(45) Veröffentlichungstag und Bekanntmachung des Hinweises auf die Patenterteilung: **27.05.1998**
(21) Anmeldenummer: 96103274.5
(22) Anmeldetag: 03.03.1996
(51) Int. Cl.: F16K 47/08, E03C 1/08

(54) **Durchflussbegrenzendes Ventil zum Einfügen zwischen einen Brauseschlauch und eine Handbrause**
Flow limiting valve insertion between a shower hose and a hand shower
Valve de limitation de débit, pour insertion entre un tuyau de douche et une douche à main

(30) Priorität: 10.03.1995 DE 19508631
(43) Veröffentlichungstag der Anmeldung: 11.09.1996
(73) Patentinhaber: HANSA METALLWERKE AG, D-70567 Stuttgart (DE)
(72) Erfinder:
(74) Vertreter: Ostertag, Reinhard

(56) Entgegenhaltungen:
- EP-A- 0 641 962
- DE-A- 3 643 320
- FR-A- 1 483 432
- FR-A- 2 253 177
- FR-A- 2 697 315
- GB-A- 2 198 214

## Beschreibung

Die Erfindung betrifft ein durchflußbegrenzendes Ventil zum Einfügen zwischen einen Brauseschlauch und eine Handbrause mit
a) einem Gehäuse, welches einen ersten Anschluß zur Verbindung mit dem Brauseschlauch und einen zweiten Anschluß zur Verbindung mit der Handbrause aufweist;
b) einem innerhalb des Gehäuses angeordneten beweglichen Ventilelement, das durch seine Position die Menge des durchströmenden Wassers bestimmt;
c) einer Handbetätigungseinrichtung, mit welcher die Position des Ventilelementes verändert werden kann.

Ein derartiges Ventil ist in der Form eines Absperrventiles vom Markt her bekannt, an welchem der Benutzer die Brause kurzzeitig abstellen kann, um sich einzuseifen, ohne daß er hierzu die weiter entfernt liegende Brausearmatur erreichen muß. Sowohl das Öffnen als auch das Schließen erfolgt manuell. Mit Hilfe dieses Ventils läßt sich zwar insofern eine gewisse Wasserersparnis erzielen, als während des Einseifvorganges der Wasserfluß durch die Brause häufiger abgestellt werden dürfte als ohne ein solches Ventil; auf die Menge des normalerweise die Brause durchströmenden Wassers hat aber dieses bekannte Ventil keinen Einfluß.

Bekannt ist außerdem ein Ventil, welches in eine Handbrause integriert ist und zwei stabile Stellungen aufweist: in einer dieser Stellungen wird das die Brause durchströmende Wasser stärker als in der anderen Stellung gedrosselt. Diese Konstruktion ist aufgrund ihrer Integration in die Brause verhältnismäßig aufwendig und läßt sich nicht nachrüsten. Vor allem aber gibt sie der geringeren Wassermenge keinen Vorrang, sodaß ein Wassereinspareffekt hierdurch nur bedingt erzielt wird.

Aufgabe der vorliegenden Erfindung ist es, ein durchflußbegrenzendes Ventil der eingangs genannten Art derart auszugestalten, daß im Normalbetrieb ohne Zutun des Benutzers eine Wasserersparnis möglich ist, gleichwohl bei Bedarf die volle Literleistung zur Verfügung steht, wobei das Ventil bei bestehenden Brausen nachrüstbar sein soll.

Diese Aufgabe wird erfindungsgemäß dadurch gelöst, daß
d) in dem Wasserweg durch das Gehäuse parallel zueinander eine erste Durchflußöffnung mit kleinerem Querschnitt und eine zweite Durchflußöffnung mit größerem Querschnitt liegen;
e) das Ventilelement ein Ventilteller ist, der zwei stabile Positionen einnehmen kann, nämlich
   ea) eine erste Position, in welcher er den Wasserweg in die zweite Durchflußöffnung größeren Querschnittes verschließt oder erheblich drosselt und den Wasserweg in die erste Durchflußöffnung kleineren Querschnittes freigibt;
   eb) eine zweite Position, in welcher er den Wasserweg in die zweite Durchflußöffnung größeren Querschnittes freigibt;
f) eine Federeinrichtung vorgesehen ist, welche den Ventilteller in Richtung auf die erste Position zu bewegen sucht.

Erfindungsgemäß wird also das durchflußbegrenzende Ventil ähnlich wie die bekannten Absperrventile zwischen Brauseschlauch und Handbrause geschaltet, so daß es grundsätzlich bei bestehenden Brauseanlagen nachgerüstet werden kann. Aufgrund der im Hauptanspruch angegebenen konstruktiven Einzelheiten ist das Ventil so ausgelegt, daß normalerweise das Wasser zur Brause durch die kleinere Durchflußöffnung mit einer Literleistung strömt, die unter der maximal möglichen Literleistung liegt. Diese Literleistung wird so gewählt, daß sie zum normalen Duschen vollständig ausreicht. Nur in den besonderen Fällen, in denen der Benutzer ausnahmsweise eine größere Literleistung der Brause wünscht, kann er aktiv werden und mit Hilfe der Betätigungseinrichtung den Ventilteller so umstellen, daß nunmehr die größere Durchflußöffnung freiliegt und so eine größere Wassermenge pro Zeiteinheit das Ventil zur Brause durchströmen kann. In dieser Stellung wird der Ventilteller auch nach Loslassen der Handbetätigungseinrichtung durch den resultierenden Wasserdruck gehalten. Wird das Brausen entgültig beendet und der Wasserfluß hierzu an der Brausearmatur abgestellt, so kehrt der Ventilteller automatisch wieder in die "Normalposition" zurück, in welcher nur die Durchflußöffnung kleineren Querschnittes freigegeben wird. Aufgrund des so erzielten Vorranges des Betriebszustandes mit kleinerer Literleistung, der ein Aktivwerden des Benutzers zur Erzielung größerer Literleistungen erforderlich macht, lassen sich insbesondere in öffentlichen Einrichtungen erhebliche Wassereinsparungen erzielen.

Bei einer vorteilhaften Ausführungsform der Erfindung ist innerhalb des Gehäuses eine Trennwand vorgesehen, welche einen radial verlaufenden Abschnitt und einen achsparallel verlaufenden Abschnitt aufweist, wobei in jedem der Abschnitte jeweils eine der beiden Durchflußöffnungen vorgesehen ist. Durch diese Ausgestaltung bleibt die Form der Inneneinteilung des Gehäuses einfach und ist leicht zu spritzen.

Bei einer besonders bevorzugten Ausführungsform der Erfindung dieser Art ist die Durchflußöffnung größeren Querschnitts in dem achsparallel verlaufenden Abschnitt der Trennwand vorgesehen und die Handbetätigungseinrichtung umfaßt einen Betätigungsschaft, der an seinem im Gehäuse liegenden Ende mit dem Ventilteller verbunden ist und in radialer Richtung aus dem Gehäuse herausgeführt ist. Das Betätigungsorgan der Handbetätigungseinrichtung läßt sich auf diese Weise bequem erreichen und optisch befriedigend in der Mantelfläche des Gehäuses unterbringen.

Vorteilhaft ist schließlich, wenn die Handbetätigungseinrichtung ein wippenförmiges Betätigungsorgan umfaßt. Dieses läßt sich leicht in die Mantelfläche des Ventils integrieren und ist gut bedienbar.

Ein Ausführungsbeispiel der Erfindung wird nachfolgend anhand der Zeichnung näher erläutert; es zeigen
- Figur 1:: einen Axialschnitt durch ein durchflußbegrenzendes Ventil;
- Figur 2:: einen Axialschnitt, ähnlich der Figur 2, jedoch in einer anderen Position des in dem Ventil befindlichen Ventiltellers.

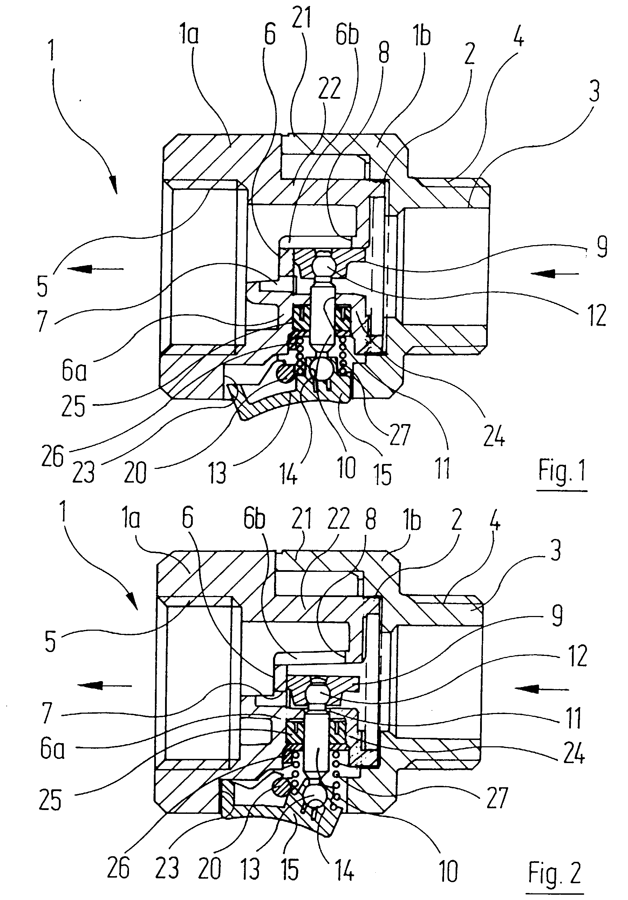

In Figur 1 ist ein Axialschnitt durch ein Ventil dargestellt, welches zwischen das Ende eines Brauseschlauches und eine normalerweise direkt mit dem Brauseschlauch verbundene Handbrause gelegt wird und dazu dient, die Menge des der Handbrause zufließenden Wassers auf einen Normalwert zu begrenzen, der aber durch Handbetätigung auf einen größeren Wert erhöht werden kann. Das dargestellte Ventil umfaßt ein Gehäuse 1, welches aus zwei Teilen 1a und 1b zusammengesetzt ist. Die beiden Teile 1a und 1b sind an der mit dem Bezugszeichen 2 gekennzeichneten Stelle dicht miteinander verschweißt; sie können daher funktional als Einheit betrachtet werden.

An das in Figur 1 rechte Gehäuseteil 1b ist ein Anschlußnippel 3 angeformt, welcher in seiner Ausgestaltung dem herkömmlichen Anschlußnippel einer Handbrause entspricht. Der Anschlußnippel 3 trägt ein Außengewinde 4, an welchem ein Brauseschlauch befestigt werden kann.

Im in Figur 1 linken Gehäuseteil 1a ist, koaxial zum Anschlußnippel 3, eine Gewindebohrung 5 angebracht, mit welcher das Gehäuseteil la auf den Anschlußnippel einer Handbrause aufgedreht werden kann, die also aus den oben genannten Gründen auch komplementär zu dem Außengewinde 4 auf dem Anschlußnippel 3 des rechten Gehäuseteiles 1b ist.

Das linke Gehäuseteil la ist mit einer abgewinkelten Trennwand 6 versehen, die einen im wesentlichen radial zum Gehäuse 1 verlaufenden Abschnitt 6a und einen im wesentlichen achsparallel verlaufenden Abschnitt 6b aufweist. Durch den radial verlaufenden Abschnitt 6a der Trennwand 6 ist eine Durchflußbohrung 7 verhältnismäßig kleinen Querschnittes hindurchgeführt; im achsparallel verlaufenden Abschnitt 6b der Trennwand 6 ist eine Durchflußbohrung 8 verhältnismäßig großen Querschnitts angebracht.

Die Durchströmung des dargestellten Ventiles von dem Anschlußnippel 3 zur Anschlußbohrung 5 durch die beiden Durchflußöffnungen 7 und 8 der Trennwand 6 hindurch wird von einer Ventilteller 9 beeinflußt. In Figur 1 liegt dieser Ventlteller 9 derart an der Durchflußöffnung 8 im Abschnitt 6b der Trennwand 6 an, daß diese verschlossen ist und ausschließlich die Durchflußöffnung 7 im Abschnitt 6a der Trennwand 6 freigegeben wird.

Der Ventilteller 9 kann mit Hilfe eines Betätigungsmechanismus von der Trennwand 6 abgehoben werden, so daß die Durchflußöffnung 8 im Abschnitt 6b der Trennwand 6 freigegeben wird. Der Ventilteller 9 braucht in dieser zweiten Stellung, die in Figur 2 dargestellt ist, die Durchflußöffnung 7 im Abschnitt 6a der Trennwand 6 nicht dicht zu verschließen.

Der Betätigungsmechanismus für den Ventilteller 9 umfaßt einen Betätigungsschaft 10, der durch eine radial gerichtete Öffnung 11 in der Wandung des linken Gehäuseteiles la hindurchgeführt ist. Das innere Ende des Betätigungsschafts 10 ist als Kugel 12 ausgebildet, welche in das elastische Material des Ventiltellers 9 formschlüssig eingerastet ist.

Auch das außenliegende Ende des Betätigungsschaftes 11 ist eine Kugel 13, die in eine entsprechende Aufnahme 14 eines wippenförmigen Betätigungsorganes 15 eingeschnappt ist. Letzteres ist mittels eines Schwenkzapfens 20 an einer Schürze 21 des rechten Gehäuseteiles 1b angelenkt, welche einen im Durchmesser verjüngten Bereich 22 des linken Gehäuseteiles 1a mit Abstand umgibt. Das wippenförmige Betätigungsorgan 15 befindet sich zum größeren Teil innerhalb einer Öffnung 23 der Schürze 21, so daß also nur ein kleiner Teil über die Außenkontur des Gehäuses 1 übersteht.

In einer topfförmigen Vertiefung 24 der Außenwand des linken Gehäuseteiles 1a, welche den Betätigungsschaft 10 koaxial umgibt, ist eine Formdichtung 25 untergebracht, welche den Betätigungsschaft 10 gegen das Gehäuse 1 abdichtet. Zwischen einer Beilagescheibe 26, die auf der Außenseite der Formdichtung 25 aufliegt, und dem wippenförmigen Betätigungsorgan 15 wirkt eine Rückstellfeder 27, welche den Ventilteller 9 auf die Durchflußöffnung 8 zu bewegen sucht. Diese Rückstellfeder 27 ist im dargestellten Ausführungsbeispiel eine Zugfeder. Statt deren könnte auch eine Druckfeder verwendet werden, die dann aber auf der gegenüberliegenden Seite des Schwenkzapfens 20 zwischen dem wippenförmigen Betätigungsorgan 15 und dem Gehäuseteil 1b anzuordnen wäre.

Die Funktion des beschriebenen Ventiles ist wie folgt:

Es sei angenommen, daß das Gehäuse 1 mittels des Anschlußnippels 3 mit einem Brauseschlauch und mittels der Gewindebohrung 5 mit einer Handbrause verbunden ist. Normalerweise befindet sich der Ventilteller 9 in der in Figur 1 dargestellten Position, in welcher ein Durchfluß des Wassers nur durch die Durchlaßöffnung 7 verhältnismäßig kleinen Querschnittes freigegeben ist. Dies bedeutet, daß aufgrund der Drosselwirkung der Durchlaßöffnung 7 nur eine beschränkte Wassermenge pro Zeiteinheit das Ventil durchströmen kann. Stellt der Benutzer der Brause fest, daß die normale Wassermenge für einen speziellen Zweck nicht ausreicht, beispielsweise, um eine bestimmte Massagewirkung der aus der Brause austretenden Wasserstrahlen zu erzielen, so stellt er mittels des wippenförmigen Betätigungsorganes 15 den Ventilteller 9 in die in Figur 2 dargestellte Position um. Nunmehr kann das Wasser (in erster Linie) durch die Durchlaßöffnung 8 in der Trennwand 6 hindurchströmen. Da diese Durchlaßöffnung 8 einen sehr viel größeren Querschnitt aufweist, ist ihre Drosselwirkung sehr viel geringer als diejenige der Durchlaßöffnung 7. Die pro Zeiteinheit das Ventil durchfließende Wassermenge ist also sehr viel größer als in Figur 1. Die Angriffsfläche für den Wasserdruck ist auf der Rückseite des Ventiltellers 9 um die Querschnittsfläche des Betätigungsschaftes 10 kleiner als an der der Durchlaßöffnung 8 zugewandten Vorderseite. Die hierdurch resultierende Druckdifferenz reicht aus, den Ventilteller 9 entgegen der Kraft der Rückstellfeder 26 in der in Figur 2 dargestellten Position zu halten. Mit anderen Worten: Das Wasser fließt in der größeren Menge, auch wenn der Benutzer das wippenförmige Betätigungsorgan 15 losgelassen hat.

Stellt der Benutzer der Brause dann das Wasser an der Brausearmatur ab, welche dem Brauseschlauch vorgeschaltet ist und der eigentlichen Mengen- und ggf. Temperatureinstellung des zu der Brause strömenden Wassers dient, so fällt die auf den Ventilteller 9 wirkende Druckdifferenz des Wassers fort. Unter der Wirkung der Rückstellfeder 26 kehrt nunmehr das wippenförmige Betätigungsorgan 15, der Betätigungsschaft 10 und damit der Ventilteller 9 wieder in die in Figur 1 dargestellte Normalposition zurück. Wird die Brause erneut in Benutzung genommen, so fließt das Wasser zunächst wieder mit der kleineren "Normalmenge".

## Patentansprüche

1. Durchflußbegrenzendes Ventil zum Einfügen zwischen einen Brauseschlauch und eine Handbrause mit
a) einem Gehäuse (1), welches einen ersten Anschluß (3) zur Verbindung mit dem Brauseschlauch und einen zweiten Anschluß (5) zur Verbindung mit der Handbrause aufweist;
b) einem innerhalb des Gehäuses (1) angeordneten beweglichen Ventilelement (9), das durch seine Position die Menge des durchströmenden Wassers bestimmt;
c) einer Handbetätigungseinrichtung (15), mit welcher die Position des Ventilelementes (9) verändert werden kann,
dadurch gekennzeichnet, daß
d) in dem Wasserweg durch das Gehäuse (1) parallel zueinander eine erste Durchflußöffnung (7) mit kleinerem Querschnitt und eine zweite Durchflußöffnung (8) mit größerem Querschnitt liegen;
e) das Ventilelement ein Ventilteller (9) ist, der zwei stabile Positionen einnehmen kann, nämlich
ea) eine erste Position, in welcher er den Wasserweg in die zweite Durchflußöffnung (8) größeren Querschnittes verschließt oder erheblich drosselt und den Wasserweg in die erste Durchflußöffnung (7) kleineren Querschnittes freigibt;
eb) eine zweite Position, in welcher er den Wasserweg in die zweite Durchflußöffnung (8) größeren Querschnittes freigibt;
f) eine Federeinrichtung (26) vorgesehen ist, welche den Ventilteller (9) in Richtung auf die erste Position zu schieben sucht.

2. Ventil nach Anspruch 1, dadurch gekennzeichnet, daß
innerhalb des Gehäuses (1) eine Trennwand (6) vorgesehen ist, welche einen radial verlaufenden Abschnitt (6a) und einen achsparallel verlaufenden Abschnitt (6b) aufweist, wobei in jedem der Abschnitte (6a, 6b) jeweils eine der beiden Durchflußöffnungen (7, 8) vorgesehen ist.

3. Ventil nach Anspruch 2, dadurch gekennzeichnet, daß
die Durchflußöffnung (8) großen Durchmessers in dem achsparallel verlaufenden Abschnitt (6b) der Trennwand (6) vorgesehen ist und daß die Handbetätigungseinrichtung einen Betätigungsschaft (10) umfaßt, der an seinem im Gehäuse (1) liegenden Ende mit dem Ventilteller (9) verbunden ist radialer Richtung aus dem Gehäuse (1) ausgeführt ist.

4. Ventil nach einem der vorhergehenden Ansprüche, dadurch
gekennzeichnet, daß die Handbetätigungseinrichtung ein wippenförmiges Betätigungsorgan (15) umfaßt.

## Claims

1. Flow-limiting valve for insertion between a shower hose and a hand shower, having
a) a housing (1) which comprises a first connection (3) for connection with the shower hose and a second connection (5) for connection with the hand shower;
b) a valve element (9) arranged movably inside the housing (1), which valve element determines by its position the amount of water flowing through;
c) a manual operating device (15) by which the position of the valve element (9) can be changed,
characterised in that
d) a first flow opening (7) of relatively small cross-section and a second flow opening (8) of relatively large cross-section lie parallel to one another in the path taken by the water through the housing (1);
e) the valve element is a valve disc (9) which is able to assume two stable positions, namely
ea) a first position, in which it closes or significantly throttles the path taken by the water into the second flow opening (8) of relatively large cross-section and unblocks the path taken by the water into the first flow opening (7) *of* relatively small cross-section;
eb) a second position, in which it unblocks the path taken by the water into the second flow-opening (8) of relatively large cross-section;
f) a spring device (26) is provided, which attempts to push the valve disc (9) towards the first position.

2. Valve according to claim 1, characterised in that inside the housing (1) there is provided a separating wall (6) which comprises a radially extending portion (6a) and portion (6b) running parallel to the axis, a respective one of the two flow openings (7, 8) being provided in each of the portions (6a, 6b).

3. Valve according to claim 2, characterised in that the flow opening (8) of larger diameter is provided in the portion (6b) of the separating wall (6) running parallel to the axis, and that the manual operating device comprises an operating shaft (10) which is connected at its end lying in the housing (1) to the valve disc (9) and is led radially out of the housing (1).

4. Valve according to any one of the preceding claims, characterised in that the manual operating device comprises a rocker-type operating element (15).

## Revendications

1. Valve de limitation de débit pour insertion entre un tuyau de douche et une douche à main, avec
(a) un boîtier (1) qui présente un premier raccord (3) pour le branchement du tuyau de douche et un second raccord (5) pour le branchement de la douche à main ;
(b) un élément de valve (9) mobile, placé à l'intérieur du boîtier (1) qui définit par sa position la quantité d'eau s'écoulant;
(c) un dispositif de commande manuelle (15) avec lequel la position de l'élément de valve (9) peut être modifiée,
**caractérisée en ce que**
(d) une première ouverture d'écoulement (7) de petite section et une seconde ouverture d'écoulement (8) de section plus grande, parallèles l'une par rapport à l'autre, sont placées dans le boîtier (1) sur la trajectoire de l'eau ;
(e) l'élément de valve est une tête de soupape (9), qui peut adopter deux positions stables, à savoir
(ea) une première position dans laquelle elle ferme, ou elle réduit considérablement, l'acheminement de l'eau dans la seconde ouverture d'écoulement (8) de section plus grande, et elle libère la trajectoire de l'eau dans la première ouverture d'écoulement (7) de petite section;
(eb) une seconde position, dans laquelle elle libère la trajectoire de l'eau dans la seconde ouverture d'écoulement (8) de section plus grande ;
(f) un dispositif à ressort (26) est prévu qui essaie de pousser la tête de soupape (9) dans la direction de la première position.

2. Valve selon la revendication 1, **caractérisée en ce qu**'une cloison de séparation (6) est prévue dans le boîtier (1), laquelle présente un segment radial (6a) et un segment parallèle à l'axe (6b), l'une des deux ouvertures d'écoulement (7, 8) étant prévue dans chaque segment (6a, 6b).

3. Valve selon la revendication 2, **caractérisée en ce que** l'ouverture d'écoulement (8) de grand diamètre est prévue dans le segment parallèle à l'axe (6b) de la cloison de séparation (6) et que le dispositif de commande manuelle contient une tige de commande (10) reliée à la tête de soupape (9) sur son extrémité placée dans le boîtier (1) et dirigée radialement en dehors du boîtier (1).

4. Valve selon l'une des revendications ci-dessus, **caractérisée en ce que** le dispositif de commande manuelle contient un organe de commande (15) en forme de bascule.
